# FASCICULE DE BREVET EUROPEEN

(11) **EP 0 519 832 B1**
(45) Date de publication et mention de la délivrance du brevet: **26.07.1995**
(21) Numéro de dépôt: 92401723.9
(22) Date de dépôt: 19.06.1992
(51) Int. Cl.: F28F 25/08, B01J 19/32

(54) **Corps d'échange pour réfrigérant atmosphérique à pluie et son procédé de réalisation**
Einsatzgefügestruktur des Berieselungstyps für einen Kühlturm und Verfahren zur Herstellung
Structure for a splash type fill assembly and method of manufacturing same

(30) Priorité: 21.06.1991 FR 9107659
(43) Date de publication de la demande: 23.12.1992
(73) Titulaire: GEC ALSTHOM SA, 75116 Paris (FR)
(72) Inventeur: Midrier, Serge, F-92600 Asnières-sur-Seine (FR); Lenglet, Paul, F-91570 Bièvres (FR); Lemoine, Pierre, F-94120 Fontenay-sous-Bois (FR)
(74) Mandataire: Bourely, Paul

(56) Documents cités:
- EP-A- 0 011 557
- EP-A- 0 371 475
- WO-A-85/04243
- GB-A- 2 008 735
- US-A- 4 451 411

## Description

La présente invention trouve notamment application dans une centrale de production d'énergie électrique du type comportant un ou plusieurs groupes turbo-alternateurs alimentés en vapeur d'eau. La vapeur sortant des turbines de tels groupes est envoyée dans un condenseur. Le refroidissement de ce dernier est assuré par la circulation d'une quantité d'eau dépendant de la puissance du groupe desservi. Cette eau est échauffée lors de son passage dans le condenseur. Elle est ensuite refroidie dans un réfrigérant atmosphérique puis renvoyée dans le condenseur.

Un réfrigérant atmosphérique à pluie est un échangeur de chaleur dans lequel l'eau est refroidie par contact direct avec l'air. Ce contact provoque l'évaporation d'une fraction de l'eau échauffée dans le condenseur de la centrale et un refroidissement corrélatif de l'eau restante. L'échange thermique s'effectue donc à la fois par évaporation partielle de l'eau et par convection entre le circuit d'air de refroidissement et le circuit d'eau utilisant le réfrigérant.

Dans un dispositif de ce genre un distributeur d'eau distribue l'eau chaude au-dessus d'un corps d'échange pour mettre cette eau sous forme de pluie en contact avec un courant d'air. L'eau ainsi refroidie est recueillie dans un bassin de réception de l'eau froide. Dans le corps d'échange l'eau qui a été divisée sous forme de gouttes de pluie circule gravitairement. L'air servant au refroidissement est mis en circulation par un ou plusieurs ventilateurs aspirants ou soufflants, ou par une cheminée de grande hauteur. Les circulations de l'eau et de l'air peuvent se faire soit parallèlement soit transversalement.

Le corps d'échange est constitué de plaques d'éclatement placées horizontalement dans le courant d'air et disposées en planchers successifs qui assurent à chaque étage de nouveaux éclatements de gouttes de façon à augmenter le temps de contact entre l'eau et l'air et à multiplier la surface d'échange. Ces plaques peuvent être en bois, en amiante-ciment, en matière plastique ou en tout autre matériau compatible avec les caractéristiques de l'eau utilisée. Elles sont portées par des suspentes constituées de fils de grande résistance en traction qui sont habituellement reliés les uns aux autres par des traverses. Ces dernières sont constituées également de fils qui peuvent être de résistance moindre et qui sont soudées aux suspentes de manière à constituer des grillages. Ces grillages sont couramment réalisés en acier. Ils sont disposés verticalement et suspendus à une structure supérieure qui est parfois constituée par le distributeur d'eau.

Les plaques d'éclatement sont liées à ces grillages par l'intermédiaire de pièces d'accrochage habituellement réalisées en matière plastique. Pour la réalisation de corps d'échange connus une telle pièce est préalablement formée en plusieurs parties, par exemple par moulage, puis montée par encliquetage, c'est-à-dire avec déformation élastique au moins provisoire, de manière à créer des liaisons irréversibles de cette pièce avec d'une part un grillage, d'autre part une plaque d'éclatement.

Un autre corps d'échange est connu par le document US-A-4 451 411. Il comporte des plaques d'éclatement accrochées à des suspentes par l'intermédiaire de pièces d'accrochage liées à ces suspentes, chaque pièce d'accrochage étant constituée par un bloc monolithique. Un jeu est ménagé entre ce bloc et la suspente pour permettre la mise en place de ce bloc.

Ces corps d'échange connus présentent à la longue des ruptures de grillages ou de pièces d'accrochage pouvant aboutir à la ruine partielle ou complète du corps d'échange. Ces ruptures diminuent la durée de service de ce corps ou du moins augmentent le coût de sa maintenance.

La présente invention a notamment pour but de permettre de réaliser simplement un corps d'échange ayant une durée de service accrue et/ou ne nécessitant qu'une maintenance moins coûteuse. Dans ces buts, elle a notamment pour objet un corps d'échange comportant des plaques d'éclatement accrochées à des suspentes par l'intermédiaire de pièces d'accrochage, ce corps étant caractérisé par le fait que chaque pièce d'accrochage est constituée par un bloc monolithique enrobant des surfaces d'accrochage primaires non verticales solidaires d'une suspente. Elle a aussi pour objet un procédé de réalisation d'un tel corps, ce procédé étant caractérisé par le fait que chaque pièce d'accrochage est formée par surmoulage sur ces surfaces d'accrochage.

Une telle pièce est donc formée alors que le matériau qui la constitue est dans un état au moins partiellement fluide ou visqueux, la forme de cette pièce lui étant donnée par appui de ce matériau contre les surfaces d'accrochage primaires rigides solidaires des suspentes ou constituées par le matériau des suspentes. La solidification de cette pièce résulte ensuite de son refroidissement ou d'un processus tel qu'une polymérisation, une réticulation, ou l'évaporation d'un solvant.

Le type des liaisons ainsi réalisées entre les pièces d'accrochage et les suspentes sera désigné ci-après par l'expression "liaison d'enrobage". Il permet d'obtenir facilement la qualité suivante, qui est ici recherchée : Presque aussi longtemps que les efforts appliqués aux deux pièces liées restent insuffisants pour provoquer une rupture au moins partielle de la liaison, ce type de liaison évite toute apparition d'un jeu macroscopique susceptible de s'accompagner de frottements. Ceci évite toute possibilité d'usure par frottement mutuel de ces pièces même lorsque des efforts alternatifs sont suffisamment importants pour entraîner des déformations de l'une de ces pièces. Ce type de liaison s'oppose en cela à un assemblage mécanique qui est réalisé entre des pièces entièrement rigides et qui, sauf précautions coûteuses, fait apparaître de tels jeux même lorsque les efforts appliqués sont largement insuffisants pour provoquer une rupture de la liaison.

La présente invention résulte en partie de l'analyse suivante des causes des ruptures constatées dans les corps d'échange connus :
Sous l'effet des excitations hydrodynamiques dues à la chute de l'eau et des excitations aérodynamiques dues à la circulation d'air, il apparait un mouvement entre la pièce d'accrochage et le grillage. Ce mouvement qui est fortement cyclé introduit une usure qui affecte principalement le grillage et qui peut être plus ou moins accentuée selon les caractéristiques de l'eau et notamment selon sa charge en matières en suspension. A terme, cette usure se traduit par les ruptures constatées.

La présente invention permet d'éviter cette usure parce que, en pratique, elle a pour effet de rendre totalement monobloc l'ensemble constitué par le grillage et la pièce d'accrochage. Pour ce faire, cette pièce peut avantageusement être surmoulée sur le grillage. Ce surmoulage peut être notamment réalisé par injection.

Il est ainsi possible d'isoler totalement le grillage métallique de toute pièce en mouvement pouvant être une source d'usure. Les seuls mouvements relatifs possibles se trouvent reportés entre la pièce d'accrochage et la plaque d'éclatement dont les matériaux présentent des sections plus importantes que le grillage et peuvent donc résister plus longtemps que ce dernier à l'abrasion par des matières en suspension dans l'eau. De plus, cette pièce et cette plaque sont généralement réalisées dans un même matériau ou dans deux matériaux de caractéristiques voisines tels que des matières plastiques de sorte que les phénomènes d'usure s'en trouvent amoindris.

Enfin, des procédés industriels automatisés connus pour le surmoulage permettent un gain substantiel sur les temps d'assemblage du corps d'échange.

La pièce d'accrochage peut être localisée aux points de croisement du grillage ou ailleurs. Cependant, le surmoulage en de tels points permet d'utiliser les fils horizontaux du grillage pour constituer les surfaces d'accrochage primaires et il renforce la rigidité d'ensemble du corps d'échange et par là même sa tenue au vent.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par un même signe de référence. Il doit être compris que les éléments mentionnés peuvent être remplacés par d'autres éléments assurant les mêmes fonctions techniques.

La figure 1 représente une vue d'ensemble d'un réfrigérant atmosphérique, en coupe par un plan vertical diamétral.

La figure 2 représente un détail de la figure 1 pour montrer un corps d'échange de ce réfrigérant.

La figure 3 représente une vue en perspective de deux plaques d'éclatements de ce corps d'échange, avec des pièces d'accrochage réalisées selon la présente invention pour porter ces plaques.

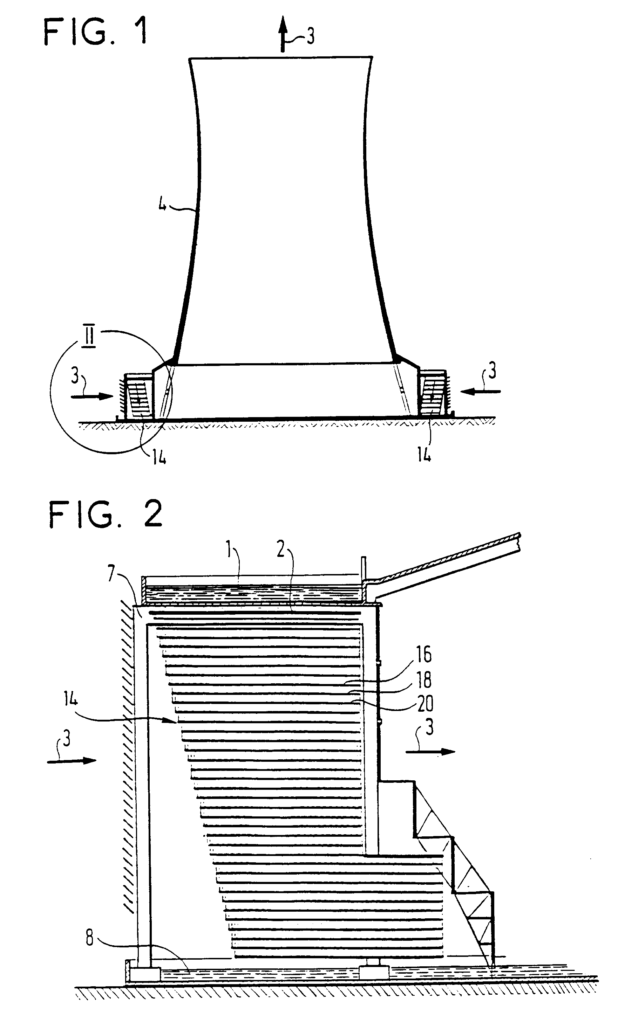

Conformément aux figures 1 et 2, pour obtenir notamment une évaporation, l'eau chaude 1 pénétrant dans le réfrigérant atmosphérique est tout d'abord divisée en fines gouttelettes par un distributeur d'eau 2.

Elle traverse ensuite par gravité un corps d'échange 14. Un courant d'air 3 nécessaire au refroidissement est entraîné de façon naturelle par le tirage d'une cheminée de grande hauteur 4. L'eau refroidie est recueillie dans un bassin de réception 8 placé sous le corps d'échange.

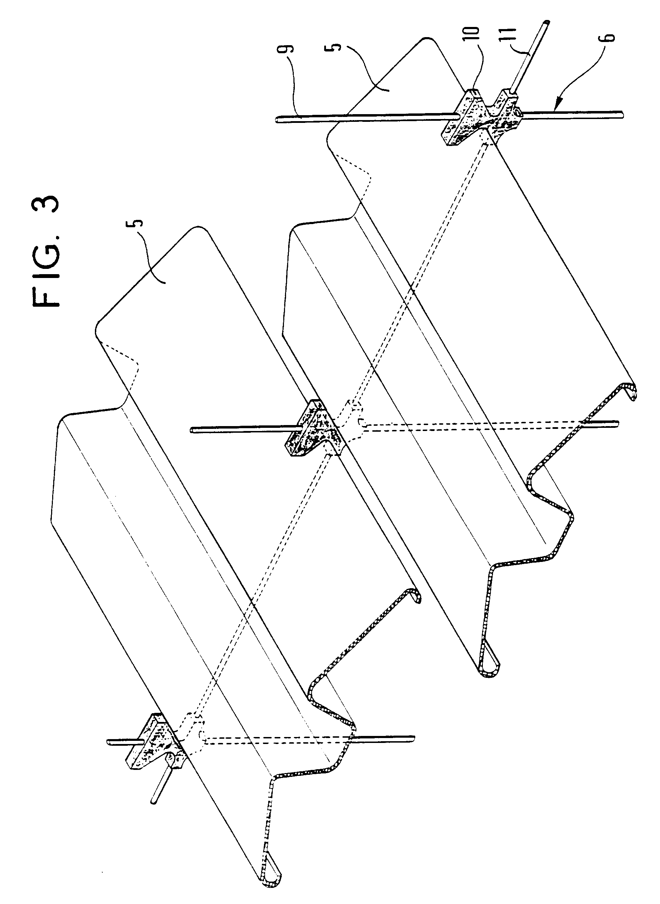

Le corps d'échange est constitué de plaques d'éclatement formant les planchers d'étages d'échange successifs tels que 16, 18 et 20 qui assurent à chaque étage de nouveaux éclatements des gouttes de façon à augmenter le temps de contact avec l'air et à multiplier ainsi la surface d'échange. Conformément à la figure 3 les plaques d'éclatement présentent la forme de lattes allongées 5. Elles pourraient aussi être constituées par des clayettes carrées.

De manière générale de telles plaques d'éclatement sont disposées sur un ensemble de support 6 suspendu à une structure supérieure 7 (voir figure 2). Cet ensemble est constitué d'une pluralité de suspentes verticales 9 sur lesquelles sont fixées des pièces d'accrochage 10 pour porter les plaques d'éclatement. Ces pièces sont surmoulées sur des surfaces d'accrochage primaires préexistantes solidaires des suspentes verticales.

A titre d'exemple, on présente en figure 3 un tel ensemble de support où les suspentes sont des fils d'acier et où les surfaces d'accrochage primaires sont réalisées par des traverses 11. Ces dernières sont constituées de fils d'acier horizontaux qui sont soudés aux suspentes constituant ainsi un grillage d'acier. Dans un tel cas, les pièces d'accrochage 10 sont surmoulées aux points de croisement du grillage.

Les traverses 11 s'étendent selon une direction transversale perpendiculaire à la direction longitudinale des lattes 5.

Il doit cependant être compris que les surfaces d'accrochage primaires pourraient, selon une variante de réalisation non représentée, être constituées différemment, par exemple par des aspérités formées sur les suspentes.

De manière plus générale, le corps d'échange peut avantageusement présenter la disposition suivante, qui est réalisée dans l'exemple décrit ci-dessus :
L'ensemble de support 6 est hétérogène, au moins un matériau des pièces d'accrochage 10 présentant des possibilités de surmoulage s'accompagnant d'une contrainte de rupture en traction plus faible que celle d'un matériau constituant au moins partiellement les suspentes 9.

Dans l'exemple décrit ci-dessus, les pièces d'accrochage sont constituées de manière homogène par un matériau présentant des possibilités de surmoulage facile tel qu'un polyacétal ou un polychlorure de vinyle. Quant au matériau constituant les suspentes, c'est un acier inoxydable. Il constitue aussi les traverses 11 qui forment des surfaces d'accrochage primaires. Ces surfaces sont rendues solidaires des suspentes par le soudage des traverses aux suspentes.

## Revendications

1. Corps d'échange pour réfrigérant atmosphérique à pluie, ce corps comportant des plaques d'éclatement (5) accrochées à des suspentes (9) par l'intermédiaire de pièces d'accrochage (10) liées à ces suspentes, ce corps étant caractérisé par le fait que chaque pièce d'accrochage (10) est constituée par un bloc monolithique enrobant des surfaces d'accrochage primaires (11) non verticales solidaires d'une suspente (9).

2. Corps d'échange selon la revendication 1, ce corps comportant d'une part une succession verticale descendante d'étages d'échange (16, 18, 20), cette succession étant prévue pour être placée dans un courant d'air (3) sous un distributeur d'eau et au-dessus d'un bassin de réception (8), chacun de ces étages (18) comportant un plancher constitué de dites plaques d'éclatement (5) pour arrêter la chute de gouttes d'eau tombant du distributeur supérieur ou du plancher d'un étage d'échange supérieur (16), et pour redistribuer l'eau de ces gouttes sous la forme de nouvelles gouttes d'eau tombant vers un étage d'échange inférieur (20) ou le bassin de réception, ce corps comportant d'autre part un ensemble de support (6) pour supporter ces plaques d'éclatement, cet ensemble de support comportant lui-même d'une part une pluralité de dites suspentes, ces suspentes étant verticales (9) et réparties horizontalement et étant elles-mêmes suspendues à une structure supérieure (7), cet ensemble de support comportant d'autre part lesdites pièces d'accrochage (10), lesdits blocs monolithiques enrobant lesdites surfaces d'accrochage primaires (11) d'une manière propre à exclure tout jeu mécanique.

3. Corps selon la revendication 2 dans lequel l'ensemble de support (6) est hétérogène, au moins un matériau des pièces d'accrochage (10) présentant des possibilités de surmoulage s'accompagnant d'une contrainte de rupture en traction plus faible que celle d'un matériau constituant au moins partiellement les suspentes (9) et les surfaces d'accrochage primaires (11).

4. Corps selon la revendication 3 dans lequel lesdites suspentes (9) sont constituées par les fils verticaux de grillages métalliques qui se succèdent selon une direction longitudinale horizontale, chacun de ces grillages comportant en outre des fils horizontaux constituant des traverses (11) qui s'étendent selon une direction transversale et rencontrent les suspentes en des points de croisement, ces traverses étant soudées à ces suspentes à chacun de ces points de croisement et constituant les surfaces d'accrochage primaires, une pièce d'accrochage (10) étant située à chacun de ces points de croisement et enrobant à la fois la suspente et la traverse qui s'y rencontrent.

5. Corps selon la revendication 4 dans lequel les plaques d'éclatement (5) présentent la forme de lattes allongées s'étendant selon la direction longitudinale.

6. Procédé de réalisation d'un corps d'échange pour réfrigérant atmosphérique à pluie, ce corps comportant des plaques d'éclatement (5) accrochées à des suspentes (9) par l'intermédiaire de pièces d'accrochage (10) s'appuyant sur des surfaces d'accrochage primaires (11) non verticales solidaires de ces suspentes, ce procédé étant caractérisé par le fait que chaque pièce d'accrochage (10) est formée par surmoulage sur les surfaces d'accrochage primaires (11).

7. Procédé selon la revendication 6, caractérisé par le fait que chaque pièce d'accrochage (10) est formée alors que le matériau qui la constitue est dans un état au moins partiellement fluide ou visqueux, la forme de cette pièce lui étant donnée par appui de ce matériau contre des surfaces d'accrochage primaires rigides (11) constituées par le matériau des suspentes (9).

## Claims

1. Heat exchanger for cooling towers comprising baffle plates (5) attached to suspension members (9) by attachment devices (10) joined to said suspension members, said heat exchanger being characterised in that each attachment device (10) is a monolithic block covering non-vertical primary attachment surfaces (11) fastened to a suspension member (9).

2. Heat exchanger according to claim 1 comprising a downward vertical succession of heat exchange storeys (16, 18, 20) adapted to be disposed in a flow of air (3) under a water distributor and over a receiving pool (8), each of said storeys (18) having a floor made up of baffle plates (5) to arrest the fall of water droplets dropping from the distributor or from the floor of a higher heat exchange storey (16) and for redistributing the water of said droplets in the form of new droplets falling into a lower heat exchange storey (20) or the receiving pool, this body also including a support assembly (6) for supporting the baffle plates, this support assembly itself including a plurality of said suspension members, said suspension members being vertical (9) and distributed horizontally and being themselves suspended from an upper structure (7), said support assembly further including said attachment devices (10), said monolithic blocks covering said primary attachment surfaces (11) in such a manner as to exclude any mechanical play.

3. Body according to claim 2 wherein the support assembly (6) is heterogeneous, at least one material of the attachment devices (10) being mouldable and having a lower tensile strength than a material constituting at least part of the suspension members (9) and the primary attachment surfaces (11).

4. Body according to claim 3 wherein said suspension members (9) are the vertical wires of metal grids in succession in a horizontal longitudinal direction, each of said grids further including horizontal wires constituting crossmembers (11) which extend in a transverse direction and meet the suspension members at crossover points, said crossmembers being welded to said suspension members at each of said crossover points and constituting the primary attachment surfaces, an attachment device (10) being disposed at each of said crossover points and covering both the suspension member and the crossmember which meet there.

5. Body according to claim 4 wherein the baffle plates (5) are in the form of elongate laths extending in the longitudinal direction.

6. Method of manufacturing a heat exchanger for a cooling tower including baffle plates (5) attached to suspension members (9) by attachment devices (10) bearing on non-vertical primary attachment surfaces (11) fastened to said suspension members, said method being characterised in that each attachment device (10) is moulded onto the primary attachment surfaces (11).

7. Method according to claim 6 characterised in that each attachment device (10) is formed when the material which constitutes it is in an at least partly fluid or viscous state, the shape of said device being imparted to it by pressing said material against rigid primary attachment surfaces (11) constituted by the material of the suspension member (9).

## Patentansprüche

1. Austauschkörper für einen atmosphärischen Riesel-Kühler, wobei dieser Körper Riesel-Platten (5) enthält, die an Hängern (9) über Befestigungsteile (10) befestigt sind, die mit diesen Hängern verbunden sind, dadurch gekennzeichnet, daß jedes Befestigungsteil (10) aus einem monolithischen Block besteht, der primäre, nicht senkrechte Befestigungsflächen (11) umhüllt, die fest mit einem Hänger (9) verbunden sind.

2. Austauschkörper nach Anspruch 1, wobei dieser Körper einerseits eine senkrechte absteigende Folge von Austauschstufen (16, 18, 20) enthält, die in einem Luftstrom (3) unter einem Wasserverteiler und oberhalb eines Empfangsbassins (8) angeordnet ist, wobei jede dieser Stufen (18) einen Boden besitzt, der aus den Riesel-Platten (5) besteht, um den Fall der Wassertropfen aufzuhalten, die vom oberen Verteiler oder vom Boden einer oberen Austauschstufe (16) herabfallen, und um das Wasser dieser Tropfen in Form von neuen Tröpfchen zu verspritzen, die auf eine untere Austauschstufe (20) oder in das Empfangsbassin fallen, wobei dieser Körper andererseits eine Trage-Einheit (6) aufweist, die diese Riesel-Platten trägt und einerseits eine Vielzahl von Hängern (9) aufweist, die senkrecht verlaufen und waagrecht verteilt sind und selbst an einer oberen Struktur (7) aufgehängt sind, und andererseits die Befestigungsteile (10) aufweist, wobei die monolithischen Blöcke die primären Befestigungsflächen (11) derart umhüllen, daß sie jedes mechanische Spiel ausschließen.

3. Körper nach Anspruch 2, bei dem die Trage-Einheit (6) heterogen ist, wobei mindestens ein Material der Befestigungsteile (10) ein Gießmaterial ist, dessen Zugfestigkeit geringer als die eines Materials ist, das mindestens teilweise die Hänger (9) und die primären Befestigungsflächen (11) bildet.

4. Körper nach Anspruch 3, bei dem die Hänger (9) aus den senkrechten Drähten von Metallgittern bestehen, die in einer waagrechten Längsrichtung aufeinander folgen, wobei jedes dieser Gitter außerdem waagrechte Drähte aufweist, die Traversen (11) bilden, die sich gemäß einer transversalen Richtung erstrecken und die die Hänger an Kreuzungspunkten treffen, wobei diese Traversen an diese Hänger an jedem dieser Kreuzungspunkte angeschweißt sind und die primären Befestigungsflächen bilden, wobei ein Befestigungsteil (10) an jedem dieser Kreuzungspunkte angeordnet ist und gleichzeitig den Hänger und die Traverse umhüllt, die sich hier treffen.

5. Körper nach Anspruch 4, bei dem die Riesel-Platten (5) die Form von länglichen Blechen haben, die sich in Längsrichtung erstrecken.

6. Verfahren zur Herstellung eines Austauschkörpers für einen atmosphärischen Riesel-Kühler, wobei dieser Körper Riesel-Platten (5) aufweist, die an Hängern (9) über Befestigungsteile (10) befestigt sind, die sich auf primären, nicht senkrechten Befestigungsflächen (11) dieser Hänger abstützen, dadurch gekennzeichnet, daß jedes Befestigungsteil (10) durch Überformen dieser Befestigungsflächen (11) gebildet wird.

7. Verfahren nach Anspruch 6, dadurch gekennzeichnet, daß jedes Befestigungsteil (10) geformt wird, wenn das dieses Teil bildende Material sich in einem zumindest teilweise flüssigen oder viskosen Zustand befindet, wobei dieses Teil durch Aufdrücken dieses Materials gegen steife primäre Befestigungsflächen (11) geformt wird, die aus dem Material der Hänger (9) bestehen.
